# EUROPEAN PATENT APPLICATION

(11) **EP 0 926 584 A1**
(43) Date of publication of application: **30.06.1999**
(21) Application number: 97203666.9
(22) Date of filing: 24.11.1997
(51) Int. Cl.: G06F 1/00

(54) **System for controlling the use of a software item**

(71) Applicant: IRDETO B.V., 2132 HD Hoofddorp (NL)
(72) Inventor: Becker, Johannes, Antonius, Hendricus, Maria, Apartment No H304, Kirkland WA 98034 (US)
(74) Representative: de Vries, Johannes Hendrik Fokke

(57) **Abstract**

A system is described for controlling the use of a software item, such as a program or data, in a computer network, comprising at least one server and a plurality of local computers, each of the local computers having means for downloading an item from a server to the local computer. The system comprises means for controlling access to the downloaded item, so that the provider of the item keeps control over a downloaded item.

## Description

The present invention relates to a system for controlling the use of a software item, such as a program or data in a computer network, in particular the Internet.

Currently Internet providers have hardly any control over the information they provide on the Internet. Generally two services are available on the Internet, a standard service which is available to everybody who can access the Internet, and a premium service, for which a subscription is required. However, after the initial set-up of the access right to the service, there is no control over the information that is downloaded to the local computer.

The invention aims to provide a system allowing flexible control over the programs or data provided on the computer network.

According to the invention a system is provided for controlling the use of a software item, such as a program or data, in a computer network, comprising at least one server and a plurality of local computers, each of said local computers having means for downloading an item from a server to the local computer, said system comprising means for controlling access to the downloaded item.

The invention will be further explained by reference to an embodiment which advantageously uses the fact that most web browsers support object embedding in a web page. Object embedding allows a small program to execute inside the display space of the browser. In the present system an object is used which can decrypt encrypted information and can allow access to this decrypted information based on the rights of the user. The web content provider encrypts the content he wishes to protect. The content may be a program, data or another type of information. The encrypted information is embedded in the web page(s) using conventional web authoring tools. The web pages are placed on a web server in a usual manner. Web users can access the web server using their standard browser on their local computers.

When a user requests a web page from a server that contains encrypted information, the web page will be downloaded to the local computer and embedded in this web page is an object which can decrypt the encrypted information. Further, this object includes instructions to retrieve the encrypted information from the server so that the encrypted information is downloaded to the local computer. To decrypt and access the data, a key is distributed to the users and this key is used by the object to decrypt the information. The means for distributing a key can distribute different keys and by the management of these keys, the type of access to the encrypted information can be controlled. For example, a first key will allow the user only to view the data on his display. A second key can be used to allow the user to store the encrypted information in decrypted form in his local computer. A third key can be provided to allow the user to print the information. In this manner the information provider keeps full control over the information downloaded in the local computers.

As an alternative or in addition to the above-described embodiment, a program may be embedded in the information and this program will automatically make a connection to the server from which the information has been downloaded as soon as the user tries to access the information. If the program cannot make a connection to the server, access to the information will not be allowed. As an alternative this program may allow access to the information a predetermined number of times only. Further the program can determine the type of access, such as viewing, printing, restoring etcetera.

The system may include a program at the server which as soon as a connection between the local computer and the server has been made, addresses this local computer and controls the access to the information depending on the rights of the user of this local computer.

It is noted that for encryption and decryption of the information, existing encryption/decryption algorithms can be used. Further, for the management of keys, existing technology in the field of pay TV can be used. By way of example it is noted that during downloading a web page and/or during each connection between server and local computers entitlement management and entitlement control messages can be forwarded to the local computers to manage the access to the information.

## Claims

1. System for controlling the use of a software item, such as a program or data, in a computer network, comprising at least one server and a plurality of local computers, each of said local computers having means for downloading an item from a server to the local computer, said system comprising means for controlling access to the downloaded item.

2. System according to claim 1, wherein said controlling means comprises means for encrypting the item, means for distributing a key to local computers and means for decrypting the encrypted item by means of said key.

3. System according to claim 2, wherein said distributing means can distribute different keys, said keys determining the type of access to the encrypted item.

4. System according to any one of the preceding claims, wherein said controlling means comprises means for automatically contacting the server from which the item has been downloaded in case the item is accessed, and means for preventing access to the item if said contacting means is not able to contact the server.

5. System according to claim 4, wherein said controlling means allows access to the item for a predetermined number of times only.

6. System according to claim 4, wherein said controlling means comprises means for addressing a local computer when the item is accessed and means for controlling the type of access to the item.
